# EUROPÄISCHE PATENTSCHRIFT

(11) **EP 3 566 902 B1**
(45) Veröffentlichungstag und Bekanntmachung des Hinweises auf die Patenterteilung: **22.02.2023**
(21) Anmeldenummer: 18171201.9
(22) Anmeldetag: 08.05.2018
(51) Int. Cl.: B60Q 1/068, B60Q 1/076

(54) **EINSTELLVORRICHTUNG FÜR EINEN KRAFTFAHRZEUGSCHEINWERFER**
ADJUSTING DEVICE FOR A MOTOR VEHICLE HEADLIGHT
DISPOSITIF DE RÉGLAGE POUR UN PHARE DE VÉHICULE AUTOMOBILE

(43) Veröffentlichungstag der Anmeldung: 13.11.2019
(73) Patentinhaber: ZKW Group GmbH, 3250 Wieselburg (AT)
(72) Erfinder: Weiss, Benjamin, 3665 Gutenbrunn (AT); Grafeneder, Markus, 3342 Opponitz (AT)
(74) Vertreter: Patentanwaltskanzlei Matschnig & Forsthuber OG

(56) Entgegenhaltungen:
- EP-A1- 2 208 639
- EP-A1- 2 213 513
- EP-A1- 2 803 528
- EP-A2- 1 270 320
- EP-A2- 3 069 931
- FR-A1- 3 022 984

## Beschreibung

Die Erfindung betrifft eine Einstellvorrichtung zum Einstellen zumindest einer optisch relevanten Baueinheit eines Kraftfahrzeugscheinwerfers, wobei die Einstellvorrichtung Folgendes umfasst:
- zumindest eine Verstelleinrichtung, welche an einem Halterungskörper angeordnet ist, mit einem um eine erste Verschubachse drehbar gelagerten Übertragungselement und einem mit dem Übertragungselement mittels einer Verbindung in mechanischem Eingriff stehenden ersten Stellelement, wobei das erste Stellelement einen Gewindeabschnitt und einen Endabschnitt aufweist,
- ein Kopplungsteil, in welchem der Endabschnitt des ersten Stellelements drehbar gelagert ist, wobei das Kopplungsteil bei einer Verstellung durch die zumindest eine Verstelleinrichtung in Bezug auf diese feststehend ist, und
- ein Gleitelement, welches verschiebbar auf dem Halterungskörper gelagert ist und eingerichtet ist, an der zumindest einen optisch relevanten Baueinheit anzugreifen, und ein auf dem Gleitelement angeordnetes Führungsteil mit einem dem Gewindeabschnitt des ersten Stellelements korrespondierendes Gegenwinde, wobei das auf den Gewindeabschnitt des ersten Stellelements anbringbare Führungsteil in Kombination mit dem Gewindeabschnitt eingerichtet ist, eine Drehbewegung des Übertragungselements in eine Schiebebewegung des Gleitelements entlang der Verschubachse zu wandeln, wobei die Einstellvorrichtung eine weitere Verstelleinrichtung, welche elektrisch betätigbar ist und eine Antriebseinrichtung aufweist, und ein zweites Stellelement umfasst, wobei die Antriebseinrichtung eingerichtet ist, das zweite Stellelement entlang einer zweiten Verschubachse zu verschieben.

Die Erfindung betrifft weiters einen Kraftfahrzeugscheinwerfer mit zumindest einer erfindungsgemäßen Einstellvorrichtung.

Zur gesetzeskonformen Einstellung des mit einem Scheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten Baueinheit handelt es sich beispielsweise um ein Lichtmodul, etwa umfassend zumindest eine Lichtquelle, zumindest einen Reflektor, zumindest eine Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer bzw. Kraftfahrzeugscheinwerfer gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, Abweichungen von Sollvorgaben, die beispielsweise nach einem Einbauvorgang des Kraftfahrzeugscheinwerfers in ein Kraftfahrzeug festgestellt werden, nachträglich durch Verwendung einer Einstellvorrichtung ausgleichen zu können.

Eine typische Aufgabe von Einstellvorrichtungen liegt in der Anpassung der Leuchtweite eines Kraftfahrzeugscheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Verstelleinrichtung vorgesehen, wobei die Verstelleinrichtung üblicherweise manuell betätigbar ist, beispielsweise umfasst die Verstelleinrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welche die Baueinheit angebracht ist, ist in dem Gleitelement gelagert, sodass bei einem Verschieben des Gleitelements die Baueinheit bzw. der Tragerahmen verschwenkt werden.

Die FR 3 022 984 A1, die EP 2 208 639 A1, die EP 2 803 528 A1 und die EP 1 270 320 A2 zeigen Einstellvorrichtungen aus dem Stand der Technik.

Es ist eine Aufgabe der Erfindung eine verbesserte Einstellvorrichtung zur Einstellung einer optisch relevanten Baueinheit eines Kraftfahrzeugscheinwerfers bereitzustellen.

Diese Aufgabe wird gelöst durch das Kennzeichen des unabhängigen Anspruchs 1.

Es kann vorgesehen sein, dass die zumindest eine Verstelleinrichtung manuell oder elektrisch betätigbar ist.

Erfindungsgemäß ist vorgesehen, dass das zweite Stellelement einen Endabschnitt aufweist, welcher Endabschnitt mit dem Kopplungsteil verbindbar ist, welches Kopplungsteil eingerichtet ist, bei einer Verschiebung des zweiten Stellelements entlang der zweiten Verschubachse eine Verschiebung des ersten Stellelements - im Falle einer parallelen Ausrichtung der ersten und der zweiten Verschubachse eine gleichgerichtete Verschiebung des ersten Stellelements - und somit des Gleitelements entlang der ersten Verschubachse zu bewirken.

Hierbei kann vorgesehen sein, dass die erste und die zweite Verschubachse nicht parallel zueinander angeordnet sind, wobei der Endabschnitt des zweiten Stellelements in einer Lagerschale - gewissermaßen gelenkartig - des Kopplungselements aufgenommen ist, sodass das Kopplungsteil und dadurch auch das erste Stellelement bzw. das Gleitelement entlang der ersten Verschubachse verschoben werden kann. Bei einer nicht gelenkartigen Verbindung zwischen dem zweiten Stellelement und dem Kopplungselement - gemäß dem Fall einer nicht parallelen Ausrichtung der ersten und der zweiten Verschubachse - würde sich das Kopplungsteil nicht verschieben lassen.

Das Stellelement kann als Stellschraube ausgebildet sein, wobei ein Abschnitt des Stellelements bzw. der Stellschraube zumindest teilweise in einer im Wesentlichen kreisförmigen, konzentrisch zur ersten Verschubachse angeordneten Öffnung des Übertragungselementes aufgenommen ist, sodass eine Drehbewegung des Übertragungselements auf das Stellelement übertragen wird.

Die im Wesentlichen kreisförmige Öffnung kann beispielsweise als Sechskant-Öffnung ausgebildet sein, wobei der Abschnitt des Stellelements, welcher von dem Übertragungselement aufgenommen wird, eine dazu korrespondierende Form aufweist, sodass diese beiden Elemente mechanisch ineinander greifen können bzw. eine formschlüssige Kraftverbindung bilden können.

Bei einer Verschiebung des zweiten Stellelements durch die Antriebseinrichtung wird, wie bereits beschrieben, das Kopplungsteil bewegt und dadurch auch das erste Stellelement, wobei das Stellelement hierbei aus bzw. in die im Wesentlichen kreisförmige Öffnung des Übertragungselements geschoben wird - jedoch nicht vollständig herausgeschoben.

Weiters greift das Gleitelement dergestalt an zumindest einer optisch relevanten Baueinheit an, dass eine Bewegung des Gleitelements in eine geänderte Ausrichtung der zumindest einen optisch relevanten Baueinheit gewandelt werden kann. Bei der optisch relevanten Baueinheit kann es sich beispielsweise um Blenden(anordnungen), Lichtquellen, Reflektoren, Linsen, ganze Lichtmodule bzw. Baugruppen, etc. handeln. Ebenso ist es möglich, dass eine optisch relevante Baueinheit in einer Verstellmechanik, beispielsweise in einem schwenkbar gelagerten Tragerahmen, aufgenommen ist. Unter dem Ausdruck "dass das Gleitelement dazu eingerichtet ist, an der zumindest einen optisch relevanten Baueinheit anzugreifen" wird daher auch eine Anordnung verstanden, in der das Gleitelement indirekt, beispielsweise über eine Verstellmechanik an der optisch relevanten Baueinheit angreift. Vorteilhafterweise können die erste und die zweite Verschubachse parallel zueinander ausgerichtet sein.

Es kann vorgesehen sein, dass die Antriebseinrichtung als Stellmotor ausgebildet ist.

Ebenso kann vorgesehen sein, dass die Antriebseinrichtung als Elektromotor ausgebildet ist.

Mit Vorteil kann vorgesehen sein, wenn der Endabschnitt des ersten Stellelements durch einen konzentrisch zur Verschubachse angeordneten Kugelkopf gebildet ist.

Ebenso kann es günstig sein, wenn der Endabschnitt des zweiten Stellelements durch einen konzentrisch zur Verschubachse angeordneten Kugelkopf gebildet ist.

In einer zweckmäßigen Ausführungsform kann vorgesehen sein, dass das Gleitelement eingerichtet ist, um an zwei optisch relevanten Baueinheiten anzugreifen.

Eine Feinjustierung des Gleitelements entlang der ersten Verschubachse wird durch die Gewindesteigung des Gewindeabschnitts des Stellelements und des dazu korrespondierenden Gegengewindes des Führungsteils bestimmt, d.h. dass für jede bestimmte Gewindesteigung eines Stellelements ein eigenes Führungsteil vorgesehen sein kann.

Hierzu kann vorgesehen sein, dass das Führungsteil lösbar an dem Gleitelement ausgebildet ist. Es kann auch vorgesehen sein, dass das Führungsteil und das Gleitelement einstückig ausgebildet sind.

Mit anderen Worten ist die Übersetzung der Drehbewegung des Übertragungselements über die Gewindesteigung des Stellelements und dem dazu korrespondierenden Führungsteil bestimmt, und diese Übersetzung kann, wie oben beschrieben, durch ein einfaches Austauschen des Stellelements und des Führungsteils variabel verändert werden, ohne dass andere Komponenten der Einstellvorrichtung verändert werden müssen.

Die Aufgabe wird ebenso durch einen Kraftfahrzeugscheinwerfer mit zumindest einer erfindungsgemäßen Einstellvorrichtung gelöst.

Dabei kann es günstig sein, wenn der Halterungskörper in Bezug auf ein Gehäuse des Kraftfahrzeugscheinwerfers feststehend angeordnet ist.

Es kann auch vorgesehen sein, dass der Halterungskörper mit einem Gehäuse des Kraftfahrzeugscheinwerfers fest verbunden ist.

Weiters kann vorgesehen sein, dass das Gehäuse des Kraftfahrzeugscheinwerfers als Halterungskörper fungiert.

Je nach Einbaulage der Einstellvorrichtung in einem Kraftfahrzeugscheinwerfer bewirkt eine Verschiebung des Gleitelements entlang der ersten Verschubachse eine Verstellung bzw. Verschwenkung des zumindest einen optisch relevanten Bauteils um eine horizontale oder vertikale Achse.

Die oben erwähnte horizontale bzw. vertikale Achse bezieht sich dabei auf einen Kraftfahrzeugscheinwerfer in ordnungsgemäßer Einbaulage in einem Kraftfahrzeug.

Beispielsweise kann eine Verschwenkung eines Lichtmoduls um eine vertikale Achse ein Kurvenlicht sein. Eine Verschwenkung eines Lichtmoduls um eine horizontale Achse kann beispielsweise einer Leuchtweiteregulierung entsprechen.

Nachfolgend wird die Erfindung anhand von beispielhaften Zeichnungen näher erläutert. Hierbei zeigt
Fig. 1 eine Explosionsansicht einer nicht erfindungsgemäßen Einstellvorrichtung,
Fig. 2 eine beispielhafte Ausführungsform einer erfindungsgemäßen Einstellvorrichtung in einer Explosionsansicht,
Fig. 3 eine beispielhafte Einstellvorrichtung in einem zusammengebauten Zustand in einer perspektivischen Ansicht, und
Fig. 4 eine bespielhafte Einstellvorrichtung mit zwei Verstelleinrichtungen in einem zusammengebauten Zustand.

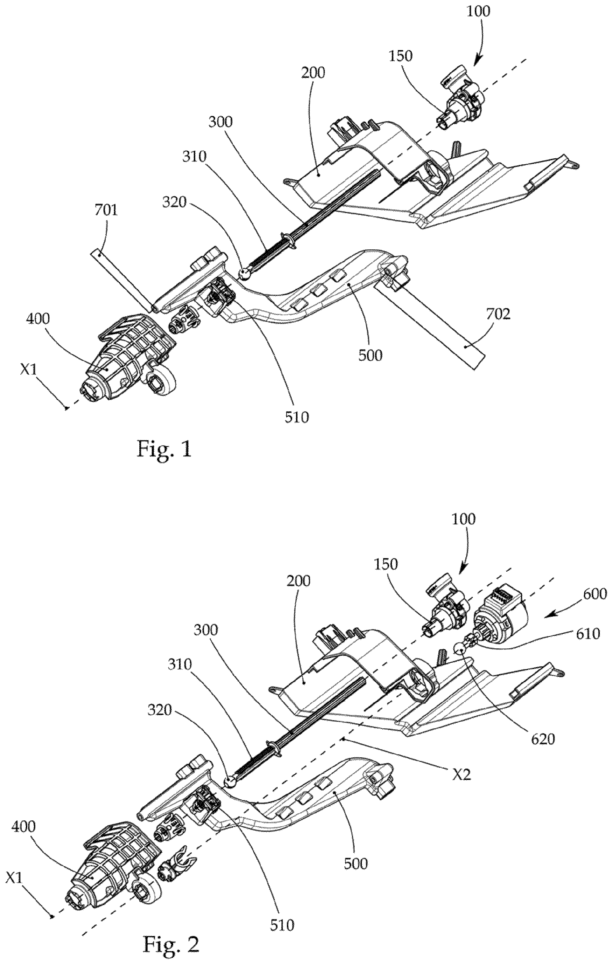

**Fig. 1** zeigt eine Einstellvorrichtung für einen Kraftfahrzeugscheinwerfer zum Einstellen von zwei optisch relevanten Baueinheit **701, 702** eines Kraftfahrzeugscheinwerfers, umfassend eine manuell betätigbare Verstelleinrichtung **100,** welche auf einem Halterungskörper **200** angeordnet ist, mit einem um eine erste Verschubachse **X1** drehbar gelagerten Übertragungselement **150** und ein mit dem Übertragungselement **150** mittels einer Verbindung in mechanischem Eingriff stehendes erstes Stellelement **300.**

Das erste Stellelement **300** weist einen Gewindeabschnitt **310** und einen Endabschnitt **320,** welcher als konzentrisch zur ersten Verschubachse **X1** gebildeter Kugelkopf ausgebildet ist, auf, welcher Endabschnitt **320** in einem Kopplungsteil **400** drehbar gelagert ist.

Ferner umfasst die Einstellvorrichtung ein Gleitelement **500,** welches verschiebbar auf dem Halterungskörper **200** gelagert ist und eingerichtet ist, an der zumindest einen optisch relevanten Baueinheit anzugreifen, und ein auf dem Gleitelement **500** angeordnetes Führungsteil **510** mit einem dem Gewindeabschnitt **310** des ersten Stellelements **300** korrespondierendes Gegenwinde, wobei das auf den Gewindeabschnitt **310** des ersten Stellelements **300** anbringbare Führungsteil **510** in Kombination mit dem Gewindeabschnitt **310** eingerichtet ist, eine Drehbewegung des Übertragungselements **150** in eine Schiebebewegung des Gleitelements **500** entlang der Verschubachse **X1** zu wandeln.

Dabei kann das Kopplungsteil **400** an dem Halterungskörper **200** fest verbunden sein, vorzugsweise mit einem Befestigungsmittel, insbesondere zumindest einer Schraube.

**Fig. 2** zeigt eine beispielhafte Einstellvorrichtung zum Einstellen von zwei optisch relevanten Baueinheit eines Kraftfahrzeugscheinwerfers, umfassend eine manuell betätigbare Verstelleinrichtung **100,** welche auf einem Halterungskörper **200** angeordnet ist, mit einem um eine erste Verschubachse **X1** drehbar gelagerten Übertragungselement **150** und ein mit dem Übertragungselement **150** mittels einer Verbindung in mechanischem Eingriff stehendes erstes Stellelement **300,** wobei das erste Stellelement **300** einen Gewindeabschnitt **310** und einen Endabschnitt **320,** welcher als konzentrisch zur ersten Verschubachse **X1** gebildeter Kugelkopf ausgebildet ist, aufweist, welcher Endabschnitt **320** in einem Kopplungsteil **400** drehbar gelagert ist.

Ferner umfasst die Einstellvorrichtung ein Gleitelement **500,** welches verschiebbar auf dem Halterungskörper **200** gelagert ist und eingerichtet ist, an der zumindest einen optisch relevanten Baueinheit anzugreifen, und ein auf dem Gleitelement **500** angeordnetes Führungsteil **510** mit einem dem Gewindeabschnitt **310** des ersten Stellelements **300** korrespondierendes Gegenwinde, wobei das auf den Gewindeabschnitt **310** des ersten Stellelements **300** anbringbare Führungsteil **510** in Kombination mit dem Gewindeabschnitt **310** eingerichtet ist, eine Drehbewegung des Übertragungselements **150** in eine Schiebebewegung des Gleitelements **500** entlang der Verschubachse **X1** zu wandeln.

Weiters ist in **Fig. 2** eine elektrisch betätigbare Verstelleinrichtung **600** mit einer Antriebseinrichtung, welcher als Stellmotor oder als Elektromotor ausgebildet sein kann, und einem zweiten Stellelement **610** zu sehen, welche Antriebseinrichtung eingerichtet ist, das zweite Stellelement **610** entlang einer zweiten Verschubachse **X2,** welche parallel zur ersten Verschubachse **X1** ausgerichtet ist, zu verschieben, wobei das zweite Stellelement **610** einen Endabschnitt **620** aufweist, welcher Endabschnitt **620** als konzentrisch zur zweiten Verschubachse **X2** angeordneten Kugelkopf mit dem Kopplungsteil **400** verbindbar ist, welches Kopplungsteil **400** eingerichtet ist, bei einer Verschiebung des zweiten Stellelements **620** entlang der zweiten Verschubachse **X2** eine gleichgerichtete Verschiebung des ersten Stellelements **300** und somit des Gleitelements **500** entlang der ersten Verschubachse **X1** zu bewirken.

Bei einer Verschiebung des Gleitelements **500** mittels der manuell betätigbaren Verstelleinrichtung verbleibt das Kopplungsteil **400,** in welchem das erste Stellelement **300** drehbar gelagert ist, in Ruhe, sodass lediglich das Gleitelement **500** eine Verschiebung entlang der ersten Verschubachse **X1** erfährt, wobei das zweite Stellelement **610** bzw. die elektrisch betätigbare Verstelleinrichtung **600** das Kopplungsteil **400** gewissermaßen befestigt bzw. in Ruhe hält, während das Gleitelement **500** mittels der manuell betätigbaren Verstelleinrichtung **100** verschoben wird.

Ein Abschnitt des Stellelements **300,** welches in dem in den Figuren gezeigten Beispielen als Stellschraube ausgebildet ist, ist in einem zusammengebauten Zustand der Einstellvorrichtung zumindest teilweise in einer im Wesentlichen kreisförmigen, konzentrisch zur ersten Verschubachse angeordneten Öffnung des Übertragungselementes **150** aufgenommen, sodass eine Drehbewegung des Übertragungselements auf das Stellelement übertragen wird.

Die im Wesentlichen kreisförmige Öffnung kann beispielsweise als Sechskant-Öffnung ausgebildet sein, wobei der Abschnitt des Stellelements **300,** welcher von dem Übertragungselement **150** aufgenommen wird, eine dazu korrespondierende Form aufweist, sodass diese beiden Elemente mechanisch ineinander greifen können bzw. eine formschlüssige Kraftverbindung entsteht, um die Drehbewegung des Übertragungselements **150** auf das Stellelement **300** zu übertragen - dies gilt für alle denkbaren Formen der Öffnung des Übertragungselements **150.**

Bei einer Verschiebung des zweiten Stellelements **610** durch die Antriebseinrichtung wird, wie bereits beschrieben, das Kopplungsteil **400** bewegt und dadurch auch das erste Stellelement **300,** wobei das erste Stellelement **300** hierbei aus bzw. in die im Wesentlichen kreisförmige Öffnung des Übertragungselements **150** geschoben wird - jedoch nicht vollständig herausgeschoben wird. Durch das Führungsteil **510,** welches mit dem ersten Stellelement **300** verbunden ist, wird dadurch auch das Gleitelement **500** gleichwirkend bewegt, da das Gegengewinde und der dazu korrespondierende Gewindeabschnitt des ersten Stellelements **300** aufgrund der fehlenden Drehbewegung gewissermaßen als feste Verbindung fungieren.

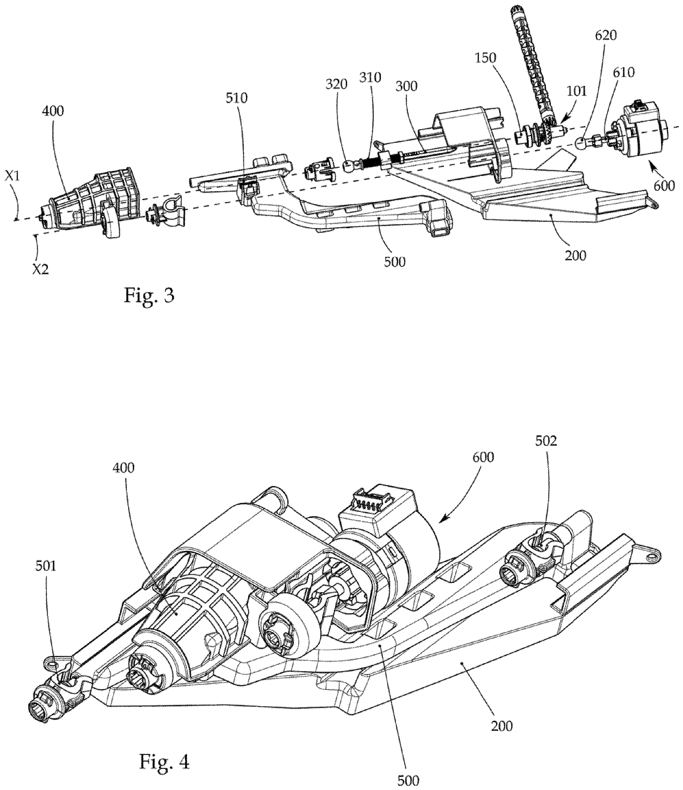

**Fig. 3** zeigt im Wesentlichen die gleiche Ausführung der Einstellvorrichtung aus **Fig. 2** , wobei die manuell betätigbare Verstelleinrichtung **101** verschieden ist. Es sei angemerkt, dass für das Beispiel aus **Fig. 2** bereits beschriebene auch für das Beispiel aus **Fig. 3** gültig ist.

**Fig. 4** zeigt einen zusammengebauten Zustand der Einstellvorrichtung aus **Fig. 2** bzw. **Fig. 3****,** wobei zusätzlich noch ein erster und ein zweiter Kopplungsbereich **501, 502** des Gleitelements **500** dargestellt sind, welche Bereiche **501, 502** eingerichtet sind, jeweils an einer optisch relevanten Baueinheit, welche in den Figuren nicht dargestellt sind, anzugreifen.

Bei der optisch relevanten Baueinheit kann es sich beispielsweise um Blenden(anordnungen), Lichtquellen, Reflektoren, Linsen, ganze Lichtmodule bzw. Baugruppen, etc. handeln. Ebenso ist es möglich, dass eine optisch relevante Baueinheit in einer Verstellmechanik, beispielsweise in einem schwenkbar gelagerten Tragerahmen, aufgenommen ist. Unter dem Ausdruck "dass das Gleitelement dazu eingerichtet ist, an der zumindest einen optisch relevanten Baueinheit anzugreifen" wird daher auch eine Anordnung verstanden, in der das Gleitelement indirekt, beispielsweise über eine Verstellmechanik an der optisch relevanten Baueinheit angreift.

**BEZUGSZEICHENLISTE**

| | |
|---|---|
| Manuelle Verstelleinrichtung | 100 |
| Übertragungselement | 150 |
| Halterungskörper | 200 |
| 1. Stellelement | 300 |
| Gewindeabschnitt | 310 |
| Endabschnitt | 320 |
| Kopplungsteil | 400 |
| Gleitelement | 500 |
| Führungsteil | 510 |
| 1. Kopplungsbereich | 501 |
| 2. Kopplungsbereich | 502 |
| Elektr. Verstelleinrichtung | 600 |
| 2. Stellelement | 610 |
| 1. Verschubachse | X1 |
| 2. Verschubachse | X2 |
| Optisch relevante Baueinheit | 701, 702 |

## Patentansprüche

1. Einstellvorrichtung zum Einstellen zumindest einer optisch relevanten Baueinheit (701, 702) eines Kraftfahrzeugscheinwerfers, umfassend
- zumindest eine Verstelleinrichtung (100, 101), welche an einem Halterungskörper (200) angeordnet ist, mit einem um eine erste Verschubachse (X1) drehbar gelagerten Übertragungselement (150) und einem mit dem Übertragungselement (150) mittels einer Verbindung in mechanischem Eingriff stehenden ersten Stellelement (300), wobei das erste Stellelement (300) einen Gewindeabschnitt (310) und einen Endabschnitt (320) aufweist,
- ein Kopplungsteil (400), in welchem der Endabschnitt (320) des ersten Stellelements (300) drehbar gelagert ist, wobei das Kopplungsteil (400) bei einer Verstellung durch die zumindest eine Verstelleinrichtung (100, 101) in Bezug auf diese feststehend ist, und
- ein Gleitelement (500), welches verschiebbar auf dem Halterungskörper (200) gelagert ist und eingerichtet ist, an der zumindest einen optisch relevanten Baueinheit anzugreifen, und ein auf dem Gleitelement (500) angeordnetes Führungsteil (510) mit einem dem Gewindeabschnitt (310) des ersten Stellelements (300) korrespondierendes Gegenwinde, wobei das auf den Gewindeabschnitt (310) des ersten Stellelements (300) anbringbare Führungsteil (510) in Kombination mit dem Gewindeabschnitt (310) eingerichtet ist, eine Drehbewegung des Übertragungselements (150) in eine Schiebebewegung des Gleitelements (500) entlang der Verschubachse (X1) zu wandeln,
wobei die Einstellvorrichtung eine weitere Verstelleinrichtung (600), welche elektrisch betätigbar ist und eine Antriebseinrichtung aufweist, und ein zweites Stellelement (610) umfasst, wobei die Antriebseinrichtung eingerichtet ist, das zweite Stellelement (610) entlang einer zweiten Verschubachse (X2) zu verschieben, **dadurch gekennzeichnet, dass** das zweite Stellelement (610) einen Endabschnitt (620) aufweist, welcher Endabschnitt (620) mit dem Kopplungsteil (400) verbunden ist,
welches Kopplungsteil (400) eingerichtet ist, bei einer Verschiebung des zweiten Stellelements (620) entlang der zweiten Verschubachse (X2) eine Verschiebung des ersten Stellelements (300) und somit des Gleitelements (500) entlang der ersten Verschubachse (X1) zu bewirken.

2. Einstellvorrichtung nach Anspruch 1, **dadurch gekennzeichnet, dass** die zumindest eine Verstelleinrichtung (100, 101) manuell oder elektrisch betätigbar ist.

3. Einstellvorrichtung nach Anspruch 1 oder 2, **dadurch gekennzeichnet, dass** die erste und die zweite Verschubachse (X1, X2) parallel zueinander ausgerichtet sind.

4. Einstellvorrichtung nach Anspruch 1 bis 3, **dadurch gekennzeichnet, dass** die Antriebseinrichtung als Stellmotor ausgebildet ist.

5. Einstellvorrichtung nach Anspruch 1 bis 4, **dadurch gekennzeichnet, dass** die Antriebseinrichtung als Elektromotor ausgebildet ist.

6. Einstellvorrichtung nach einem der Ansprüche 1 bis 5, **dadurch gekennzeichnet, dass** der Endabschnitt des ersten Stellelements durch einen konzentrisch zur ersten Verschubachse (X1) angeordneten Kugelkopf gebildet ist.

7. Einstellvorrichtung nach einem der Ansprüche 1 bis 6, **dadurch gekennzeichnet, dass** der Endabschnitt des zweiten Stellelements durch einen konzentrisch zur zweiten Verschubachse (X2) angeordneten Kugelkopf gebildet ist.

8. Einstelvorrichtung nach einem der Ansprüche 1 bis 7, **dadurch gekennzeichnet, dass** das Gleitelement eingerichtet ist, um an zwei optisch relevanten Baueinheiten anzugreifen.

9. Einstellvorrichtung nach einem der Ansprüche 1 bis 8, **dadurch gekennzeichnet, dass** das Führungsteil (510) lösbar an dem Gleitelement (500) ausgebildet ist.

10. Kraftfahrzeugscheinwerfer mit zumindest einer Einstellvorrichtung gemäß einem der Ansprüche 1 bis 9.

11. Kraftfahrzeugscheinwerfer nach Anspruch 10, **dadurch gekennzeichnet, dass** der Halterungskörper (200) in Bezug auf ein Gehäuse des Kraftfahrzeugscheinwerfers feststehend angeordnet ist.

12. Kraftfahrzeugscheinwerfer nach Anspruch 10 oder 11, **dadurch gekennzeichnet, dass** der Halterungskörper (200) mit einem Gehäuse des Kraftfahrzeugscheinwerfers fest verbunden ist.

## Claims

1. Adjusting device for adjusting at least one optically relevant structural unit (701, 702) of a motor vehicle headlamp, comprising
- at least one adjusting device (100, 101), which is arranged on a holder body (200), having a transmission element (150), which is mounted such that it can rotate about a first displacement axis (X1), and a first adjusting element (300), which is in mechanical engagement with the transmission element (150) by means of a connection, the first adjusting element (300) having a threaded portion (310) and an end portion (320)
- a coupling member (400) in which the end portion (320) of the first actuator (300) is rotatably supported, the coupling member (400) being fixed with respect to the at least one actuator (100, 101) during an adjustment thereof, and
- a sliding element (500) which is displaceably mounted on the holder body (200) and is arranged to engage the at least one optically relevant assembly, and a guide part (510) arranged on the sliding element (500) and having a mating thread corresponding to the threaded portion (310) of the first adjusting element (300), wherein the guide part (510) mountable on the threaded portion (310) of the first adjusting element (300) is arranged in combination with the threaded portion (310) to convert a rotary movement of the transmission element (150) into a sliding movement of the sliding element (500) along the displacement axis (X1),
wherein the adjusting device comprises a further adjusting device (600), which is electrically operable and has a drive device, and a second adjusting element (610), the drive device being arranged to displace the second adjusting element (610) along a second displacement axis (X2),
**characterized in that**
the second adjusting element (610) has an end portion (620) which end portion (620) is connected to the coupling part (400), which coupling part (400) is arranged to cause a displacement of the first adjusting element (300) and thus of the sliding element (500) along the first displacement axis (X1) when the second adjusting element (620) is displaced along the second displacement axis (X2).

2. Adjusting device according to claim 1, **characterized in that** the at least one adjusting device (100, 101) is manually or electrically operable.

3. Adjusting device according to claim 1 or 2, **characterized in that** the first and second displacement axes (X1, X2) are aligned parallel to one another.

4. Adjusting device according to claim 1 to 3, **characterized in that** the drive device is designed as a servomotor.

5. Adjusting device according to claim 1 to 4, **characterized in that** the drive device is designed as an electric motor.

6. Adjusting device according to one of the claims 1 to 5, **characterized in that** the end section of the first adjusting element is formed by a ball head arranged concentrically to the first displacement axis (X1).

7. Adjusting device according to one of the claims 1 to 6, **characterized in that** the end section of the second adjusting element is formed by a ball head arranged concentrically to the second displacement axis (X2).

8. Adjusting device according to one of the claims 1 to 7, **characterized in that** the sliding element is arranged to engage on two optically relevant structural units.

9. Adjustment device according to any one of claims 1 to 8, **characterized in that** the guide member (510) is detachably formed on the sliding element (500).

10. Motor vehicle headlamp having at least one adjusting device according to any one of claims 1 to 9.

11. Motor vehicle headlamp according to claim 10, **characterized in that** the retaining body (200) is arranged fixed with respect to a housing of the motor vehicle headlamp.

12. Motor vehicle headlamp according to claim 10 or 11, **characterized in that** the holder body (200) is fixedly connected to a housing of the motor vehicle headlamp.

## Revendications

1. Dispositif de réglage pour le réglage d'au moins un module optiquement important (701, 702) d'un projecteur de véhicule automobile, comprenant
- au moins un dispositif de réglage (100, 101), qui est disposé sur un corps de support (200), avec un élément de transmission (150) logé de manière rotative autour d'un premier axe de déplacement (X1) et un premier élément de réglage (300) en prise mécanique avec l'élément de transmission (150) au moyen d'une liaison, le premier élément de réglage (300) présentant une section filetée (310) et une section d'extrémité (320),
- une pièce d'accouplement (400) dans laquelle la section d'extrémité (320) du premier élément de réglage (300) est montée à rotation, la pièce d'accouplement (400) étant fixe par rapport à l'au moins un dispositif de réglage (100, 101) lors d'un réglage par celui-ci, et
- un élément coulissant (500), qui est monté de manière à pouvoir coulisser sur le corps de support (200) et qui est conçu pour s'engager avec l'au moins un ensemble optiquement pertinent, et une partie de guidage (510) disposée sur l'élément coulissant (500) et comportant un filetage opposé correspondant à la section filetée (310) du premier élément de réglage (300), la pièce de guidage (510) pouvant être montée sur la section filetée (310) du premier élément de réglage (300) étant conçue, en combinaison avec la section filetée (310), pour convertir un mouvement de rotation de l'élément de transmission (150) en un mouvement de coulissement de l'élément coulissant (500) le long de l'axe de coulissement (X1),
ou le dispositif de réglage comprend un autre dispositif de réglage (600), qui peut être actionné électriquement et qui présente un dispositif d'entraînement, et un deuxième élément de réglage (610), le dispositif d'entraînement étant conçu pour déplacer le deuxième élément de réglage (610) le long d'un deuxième axe de déplacement (X2), **caractérisé en ce que** le deuxième élément de réglage (610) présente une section d'extrémité (620), laquelle section d'extrémité (620) est reliée à la pièce de couplage (400), laquelle pièce de couplage (400) est conçue pour provoquer, lors d'un déplacement du deuxième élément de réglage (620) le long du deuxième axe de déplacement (X2), un déplacement du premier élément de réglage (300) et donc de l'élément coulissant (500) le long du premier axe de déplacement (X1).

2. Dispositif de réglage selon la revendication 1, **caractérisé en ce que** ledit au moins un dispositif de réglage (100, 101) peut être actionné manuellement ou électriquement.

3. Dispositif de réglage selon la revendication 1 ou 2, **caractérisé en ce que** le premier et le deuxième axe de déplacement (X1, X2) sont orientés parallèlement l'un à l'autre.

4. Dispositif de réglage selon les revendications 1 à 3, **caractérisé en ce que** le dispositif d'entraînement est conçu comme un servomoteur.

5. Dispositif de réglage selon les revendications 1 à 4, **caractérisé en ce que** le dispositif d'entraînement est conçu comme un moteur électrique.

6. Dispositif de réglage selon l'une des revendications 1 à 5, **caractérisé en ce que** la partie d'extrémité du premier élément de réglage est formée par une tête sphérique disposée concentriquement au premier axe de déplacement (X1).

7. Dispositif de réglage selon l'une des revendications 1 à 6, **caractérisé en ce que** la partie d'extrémité du deuxième élément de réglage est formée par une tête sphérique disposée concentriquement au deuxième axe de déplacement (X2).

8. Dispositif de réglage selon l'une des revendications 1 à 7, **caractérisé en ce que** l'élément coulissant est agencé pour venir en contact avec deux ensembles optiquement pertinents.

9. Dispositif de réglage selon l'une des revendications 1 à 8, **caractérisé en ce que** la pièce de guidage (510) est formée de manière amovible sur l'élément coulissant (500).

10. Projecteur de véhicule automobile comportant au moins un dispositif de réglage selon l'une quelconque des revendications 1 à 9.

11. Projecteur de véhicule automobile selon la revendication 10, **caractérisé en ce que** le corps de support (200) est monté fixe par rapport à un boîtier du projecteur de véhicule automobile.

12. Projecteur de véhicule automobile selon la revendication 10 ou 11, **caractérisé en ce que** le corps de support (200) est solidaire d'un boîtier du projecteur de véhicule automobile.
